# EUROPEAN PATENT SPECIFICATION

(11) **EP 1 944 877 B1**
(45) Date of publication and mention of the grant of the patent: **16.03.2011**
(21) Application number: 07290048.3
(22) Date of filing: 10.01.2007
(51) Int. Cl.: H04B 3/23

(54) **Method of modifying a residual echo**
Verfahren zur Restechoänderung
Procédé de modification d'écho résiduel

(43) Date of publication of application: 16.07.2008
(73) Proprietor: Alcatel Lucent, 75008 Paris (FR)
(72) Inventor: Moulehiawy, Abdelkrim, 75002 Paris (FR); Fadili, Moulay, 95130 Franconville (FR)
(74) Representative: Schmidt, Werner Karl

(56) References cited:
- EP-A- 0 798 877
- EP-A1- 0 199 879

## Description

The present invention relates to a method of modifying a residual echo present in a residual near-end signal of a telecommunications connection, an echo canceller with a linear processing unit and a non-linear processing unit for modifying said residual echo, and a computer program product to execute said method.

Modern echo cancellers comprise a linear processor section which subtracts an echo estimate - obtained by convolution of a far-end signal (= FES) with an adaptive FIR (= Finite Impulse Response) filter - from a primary near-end signal (= NES) to form a residual near-end signal, and a non-linear processor (= NLP) which works on this residual near-end signal to remove residual echo occurring from system non-linearities. The NLP estimates the residual echo present in the residual near-end signal. All signals below a threshold are removed from the residual near-end signal, and preferably replaced by simulated comfort noise, i.e., a replacement sound inserted into the path toward the far listener. When the NLP is active, comfort noise is sent to the far listener, instead of silence.

Double-talk is a situation when parties of a telecommunication connection are talking at the same time, posing a particular challenge for echo cancellation. The echo canceller must realize that double-talk occurs and eliminate echo signals from the near-end signal without effecting undesirable changes to the near-end voice signals intended for the far-end speaker. In case the NLP does not work accurately, e.g., does not start or end the modifications of the residual near-end signal at an appropriate time, a clipping of syllables of the near-end speech may occur, mostly affecting the first or last syllable of a word.

The echo cancellation capability of the NLP may be limited to a certain echo length, the so-called echo tail. For example, a NLP may support an echo tail of only 32 or 64 ms, although a telecommunication system may produce echoes with longer tail delays.

In a typical malfunction, the NLP does not react in time to near-end voice signals. As a consequence, syllables are replaced by comfort noise and the communication becomes incomprehensible. Similar unwanted effects can be observed when a voice getting lower at the end of a sentence is mistaken for a residual echo. This issue is all the more critical if the tail capacity of the echo canceller is high: indeed, the longer the echo tail is, the more clippings based on non-detection of double-talk exist.

In existing NLP solutions, there is a coupling between a double-talk detection (= DTD) process and the NLP. Methods used for NLP operating mode decisions are either energy-based algorithms (e.g., Geigel-DTD or robust Geigel-DTD) or correlation-based algorithms (e.g., cross-correlation or coherence methods). The Geigel-DTD based decisions for NLP require few MIPS (= Million Instructions per Second) but are not efficient because with this method, when the NLP switches to the blocking mode, it remains in this mode during the entire echo tail, which leads to disturbing clippings in case of DTD miss. On the other hand, correlation-based algorithms are quite efficient while the echo to noise ratio is high (performances are not good in cases where background noise is high), but these methods require significant memory storage and involve a high computational complexity.

This is, for example, described in the following publications: Benesty, J., Gänsler, T., Morgan, D.R., Sondhi, M.M., Gay, S.L.: Advances in Network and Acoustic Echo Cancellation, Series: Digital Signal Processing, Springer-Verlag Heidelberg 2001; Ye, H., Wu, B.X.: A new double-talk detection algorithm based on the orthogonality theorem, IEEE Trans. Comm. 39 (November 1991) 1542-1545; and Gänsler, T. and Benesty, J.: The fast normalized cross-correlation double-talk detector. Signal Process. 86, 6 (June 2006), 1124-1139.

It is the object of the present invention to provide an improved NLP method for echo cancellation.

The object of the present invention is achieved by a method of modifying a residual echo present in a residual near-end signal of a telecommunications connection between a first terminal providing a primary near-end signal at a first end of the telecommunications connection and a second terminal providing a far-end signal at another end of the telecommunications connection, wherein said residual near-end signal is created from the primary near-end signal by a linear processing unit for echo cancellation, wherein the method comprises the steps of determining, in a multi-windowing scheme in the time domain, a plurality of sub-windows of the far-end signal, selecting from said plurality of far-end signal sub-windows a sub-window corresponding to a main portion of an echo present in the primary near-end signal according to an echo path estimate filter, comparing an energy level associated with said selected sub-window of the far-end signal with an energy level associated with a sample of the residual near-end signal, and, dependent on the comparison result, modifying said residual echo for a time period which is equal to a length of said selected far-end signal sub-window. The object of the present invention is further achieved by an echo canceller with a linear processing unit for echo cancellation and a non-linear processing unit for modifying a residual echo present in a residual near-end signal of a telecommunications connection between a first terminal providing a primary near-end signal at a first end of the telecommunications connection and a second terminal providing a far-end signal at another end of the telecommunications connection, wherein said residual near-end signal is created from the primary near-end signal by the linear processing unit of the echo canceller, wherein the non-linear processing unit is adapted to execute the following steps of selecting from a plurality of sub-windows of the far-end signal a sub-window corresponding to a main portion of an echo present in the primary near-end signal according to an echo path estimate filter, wherein said said plurality of far-end signal sub-windows is determined in a multi-windowing scheme in the time domain, comparing an energy level associated with said selected sub-window of the far-end signal with an energy level associated with a sample of the residual near-end signal, and, dependent on the comparison result, modifying the residual echo for a time period which is equal to a length of said selected far-end signal sub-window. Also, the object of the present invention is achieved by a computer program product for modifying a residual echo present in a residual near-end signal of a telecommunications connection between a first terminal providing a primary near-end signal at a first end of the telecommunications connection and a second terminal providing a far-end signal at another end of the telecommunications connection, wherein said residual near-end signal is created from the primary near-end signal by a linear processing unit for echo cancellation, wherein the computer program product, when executed by a processing unit, performs the steps of selecting from a plurality of sub-windows of the far-end signal a sub-window corresponding to a main portion of an echo present in the primary near-end signal according to an echo path estimate filter, whereby said plurality of far-end signal sub-windows are determined in a multi-windowing scheme in the time domain, comparing an energy level associated with said selected sub-window of the far-end signal with an energy level associated with a sample of the residual near-end signal, and, dependent on the comparison result, modifying the residual echo for a time period which is equal to a length of said selected far-end signal sub-window.

The term "multi-windowing scheme in the time domain" is meant in a sense that a signal as a function of time, e.g., the far-end signal over time, is divided into two or more sub-windows of equal length in time. In an echo canceller, a sliding-window technique is used where a sample of a signal is taken for a certain time period, e.g., for 2000 milliseconds. The sliding window allows to sample the current signal and the past signal over a certain temporal length defined by the length of the sliding window, e.g., 2000 milliseconds. Thus, the term "multi-windowing scheme in the time domain" means that the signal covered by the sliding window is divided into a plurality of equally spaced sub-windows.

The energy level associated with a sub-window and a sample, respectively, of a signal may be determined by computing an average energy level for said sub-window and sample, respectively. It is also possible that the energy level is defined as the maximum energy value within said sub-window and sample, respectively.

The present invention proposes a suitable NLP method that allows the containment of residual echo. Thus, the invention prevents clipping or suppression of the near-end speaker signal during double-talk phases. This solution is all the more significant if the tail capacity of the echo canceller is high.

Moreover, the present invention limits the length of potential signal clippings when dealing with double-talk phases. The length is limited to the length of the selected sub-window of the far-end signal.

Furthermore, the present invention provides a good trade-off between efficiency and complexity.

The described method of computation of the energy, EnergTx, of the far-end signal, based on a time-windowing approach, gives robustness to all the decisions based on comparisons between far-end and echo-cancelled signals, combined with a low computational effort. As a consequence, in a telecommunication connection where the present invention is implemented, there are no clippings that are perceived as disturbing in a normal conversational communication.

Further advantages are achieved by the embodiments of the invention indicated by the dependent claims.

Preferably, the NLP computes the difference between the energy level associated with said selected sub-window of the far-end signal and the energy level associated with the sample of the residual near-end signal. If this difference is greater than a predefined threshold, the NLP assumes that the FES speaker speaks and the NES speaker listens. Therefore, the NLP must clip, i.e., mute the NES because it may contain unwanted echo originating from the FES. On the other hand, if the difference is below the threshold, the NLP assumes that there is double talk. Then, the main echo of FES has already been removed from the primary NES by the linear echo canceller. The residual echo still present in the residual NES is not perceivable by the FES speaker since it is covered by the high voice signal of the NES speaker. Therefore, there is no need for the NLP to clip the residual NES. The NLP lets the residual NES pass.

Further, the linear processor section generates and adapts an echo path estimate filter, usually a FIR filter, for echo cancellation. Here, the terms " echo path estimate filter" and "FIR filter" are used synonymously. The FIR filter coefficients are analyzed, preferably by a control unit controlling the echo cancellation process. The analysis comprises, according to the aforementioned multi-windowing scheme in the time domain, the division of the FIR filter into sub-windows as to locate the main echo, i.e., that time window of the FIR filter containing the main energy of the echo, at any time (the location may change during the processing). The FIR filter allows the easy determination of the relevant time window of the FES effecting the main echo contribution to the NES. The sub-window of the filter with the highest signal dispersion, e.g., the highest variance, is indicative of the location of the main echo. The NLP utilizes these results extracted from the FIR filter to choose a sub-window of the FES. If the FIR filter indicates that the main echo is located in the i-th sub-window of the FIR filter, then the NLP chooses the i-th sub-window of the FES.

According to a preferred embodiment of the invention, the echo path estimated filter is, according to the aforementioned multi-windowing scheme in the time domain, divided in N sub-windows, whereby N > 1. If the signals of the telecommunication connection are transmitted as discrete values, i.e., digitized, the echo path estimated filter can be described as a sequence of discrete filter values. Preferably, the digitized values are transmitted as data packets and frames, respectively. Thus, the echo path estimated filter may be described as having a length of L frames. Then, the filter of length L frames is divided into N sub-windows. Similarly, the FES, especially the FES covered by the sliding window, may comprise L frames. Then, the FES of L frames is divided in N sub-windows, whereby each of the N FES sub-windows corresponds to one of the N filter sub-windows. According to another preferred embodiment of the invention, the L frames of the far-end signal and the L frames of the echo path estimate filter are chosen so that the L frames are equal to the length of the echo tail capacity of the echo canceller.

Preferably, a length of the far-end signal considered in said determination of the plurality of sub-windows, i.e., the window, is chosen equal to a length of the echo path estimated filter and also equal to an echo tail capacity of the echo canceller. Thus, the length of the far-end signal used as a starting point for the determination of the FES sub-windows is equal to the length of the echo path estimated filter used as a starting point for the determination of the filter sub-windows and also equal to an echo tail capacity of the linear processing unit for echo cancellation. The advantage of this choice is that the computational multi-window approach is based on a uniform window size and sub-window basis. In a preferred embodiment, the length of the FES sample and the length of the filter sample used as a starting point for the determination of the sub-windows are of equal length and are divided into the same number N of sub-windows; and the FES sample length and the filter length is equal, in the time domain, to the echo tail capacity of the linear processing unit.

Further, it is preferable to determine the energy level of the residual near-end signal within a sub-window of the residual near-end signal whereby the sub-window of the residual near-end signal corresponds to said selected sub-window of the far-end signal. This may mean that the sub-window length of the residual near-end signal and the sub-window length of the far-end signal are equal. The sub-window of the residual near-end signal is chosen so that the energy level associated with said sub-window represents the energy level of the current near-end signal. Said determined energy level may be defined as said energy level associated with the sample of the residual near-end signal which is utilized in the comparison step with the energy level associated an energy level associated with said selected sub-window of the far-end signal.

According to another preferred embodiment of the invention, the size of the sub-windows of the echo path estimated filter and the size of the sub-windows of the far-end signal is chosen equal to the size of the sample of the residual near-end signal. Thus, the computation is based on an equivalent time frame and no additional conversions between different time bases must be done. If on the other hand, the sample size of the residual NES is different from the size of the sub-windows of the far-end signal, any comparison between energy levels must be based on the same number of frames. This means that the energy level of the signal comprising more frames than the other signal must be weighted and/or averaged so that, in the comparison step, the energy levels associated with the NES and the FES are based on the same sample size.

Preferably, the residual echo is modified by highly attenuating the residual near-end signal such that it becomes indiscernible for the FES speaker. It is also possible that the residual near-end signal is muted and replaced by comfort noise. Comfort noise is injected to overcome the "quiet" periods in a call introduced by the NLP. Without a comfort-noise injection, the resulting silence when the NLP is activated causes the line to appear to go dead.

Furthermore, with regard to a preferred embodiment of a NLP, the NLP is under control of a control unit. The control unit analyzes the FIR filter and sends an indication where the main echo is located, to be utilized for the selection of said far-end signal sub-window, to the NLP.

These as well as further features and advantages of the invention will be better appreciated by reading the following detailed description of presently preferred exemplary embodiments taken in conjunction with accompanying drawings of which:
- Fig. 1: is a block diagram of a telephone connection according to an embodiment of the invention.
- Fig. 2: are diagrams showing an echo path estimate filter, a far-end signal and a near-end signal according to an embodiment of the invention.
- Fig. 3: are diagrams illustrating the effect of the invention on a first telephone communication sample, and contrasted to the effect of a state-of-the-art NLP.
- Fig. 4: are diagrams illustrating the effect of the invention on another telephone communication sample, and contrasted to the effect of a state-of-the-art NLP.
- Fig. 5: are diagrams illustrating the effect of the invention on still another telephone communication sample, and contrasted to the effect of a state-of-the-art NLP.
- Fig. 6: is a process flow diagram according to another preferred embodiment of the invention.

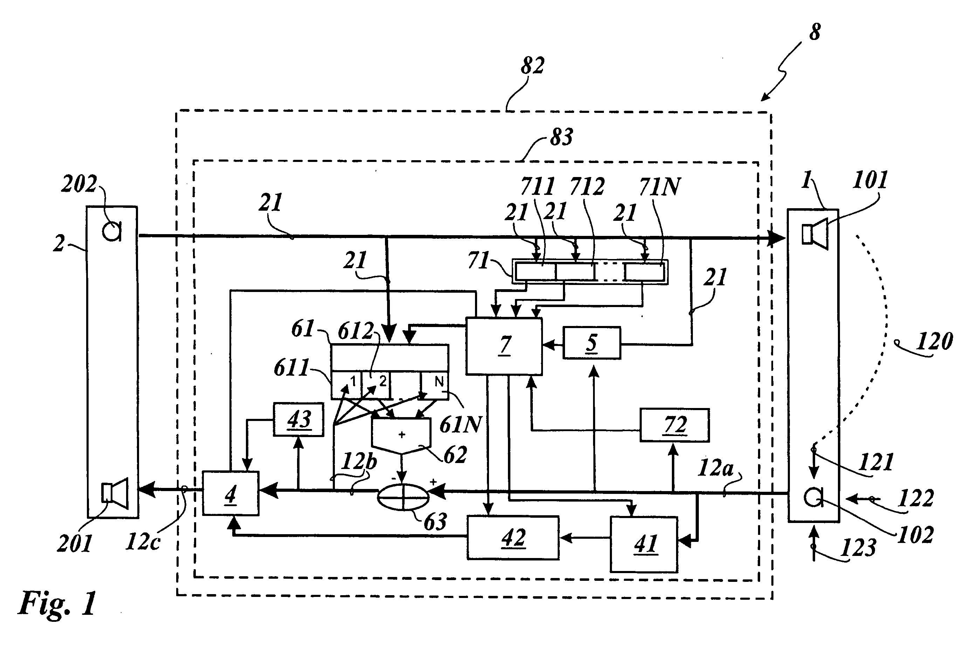

Fig. 1 is a block diagram showing a telephone connection 8 between a first terminal 1 comprising a first loudspeaker 101 and a first microphone 102 at a first end of the telephone connection 8 and a second terminal 2 comprising a second loudspeaker 201 and a second microphone 202 at another end of the telephone connection 8. The first terminal 1 is used by a near-end subscriber of the telephone connection 8 and the second terminal 2 is used by a far-end subscriber of the telephone connection 8.

The telephone connection 8 is effected by the exchange of electric signals 12a, 12b, 12c, 21 across a telecommunications network 82. The telecommunications network 82 may consist of legacy telephone networks, e.g., of the PSTN type, and/or packet-switched telephone networks, e.g., VoIP networks such as the public Internet (PSTN = Public Switched Telephone Network; VoIP = Voice over Internet Protocol). The terminals 1, 2 may be legacy telephone sets and/or VoIP telephones. Nowadays, the transmission of the telecommunication signals across the telecommunications network 82 is often done on a digitized basis, even if PSTN terminals are used.

The electric signal 21 originating from the microphone 202 of the second terminal 2 is transmitted via the telecommunications network 82 to the loudspeaker 101 of the first terminal 1. The microphone 102 of the first terminal 1 receives acoustic voice signals 122 from the near-end subscriber, acoustic echo signals 121 which originate from the loudspeaker 101 and are transmitted via the housing of the first terminal 1 and via the air, and acoustic and/or electric channel noise signals 123. The signals 121, 122, 123 received by the microphone 102 are converted into an electric primary NES signal 12a by the microphone 102 and processed to an electric residual NES signal 12b by an echo cancellation subtractor 63 associated with a linear processing unit of an echo canceller. This processed electric residual NES signal 12b is once again processed by a NLP 4 of the echo canceller before being transmitted as electric final NES signal 12c to the second terminal 2 where the electric final NES signal 12c is re-converted in an acoustic signal by means of the loudspeaker 201.

In analogy to the first terminal 1, the microphone 202 of the second terminal 2 also receives voice signals from the far-end subscriber 20, echo signals from the loudspeaker 201 and channel noise signals from the environment of the second terminal 2, which however are not shown in Figure 1 to simplify the description. The signals received by the microphone 202 are converted by the microphone 202 to the electric signal 21, and the electric signal 21 is transmitted via the telecommunications network 82 from the second terminal 2 to the first terminal 1.

The following description of the present invention is limited - for simplicity reasons - to an echo cancellation with regard to the electric signals 12a, 12b, and 12c. As we concentrate on the echo cancellation of the signals originating in the first terminal 1, the electric signals 12a, 12b and 12c originating from the first terminal 1 will be referred to in the following as primary near-end signal 12a, residual near-end signal 12b, and final near-end signal 12c, respectively, whereas the electric signal 21 originating from the second terminal 2 will be referred to as far-end signal 21.

As an acoustic wave 120 originating from the loudspeaker 101 propagates within the environment surrounding the first terminal 1 and undergoes reflections at different surfaces located in this environment, the acoustic echo signals 121 arriving at the microphone 102 consist of different fractions of the reflected acoustic wave whereby each fraction shows an individual attenuation and an individual delay with regard to the original acoustic wave generated by the loudspeaker 101.

The echo signals 121 received by the microphone 102 are unwanted. To avoid that the far-end subscriber 20 perceives an acoustic echo of his own speech when listening to the signals from his loudspeaker 201, the echo signals 121 have to be filtered out of the near-end signal 12a. A filter unit 61 is fed with the far-end signal 21 and adapted to produce - on the basis of this far-end signal 21 - an echo path estimate 60 which ressembles the real echo signal 121 as close as possible. This echo path estimate 60 is subtracted, at the echo cancellation subtractor 63, from the primary near-end signal 12a created by the microphone 102 out of the acoustic and/or electric signals 121, 122, 123. In many cases, the filter unit 61 is an adaptive FIR filter unit for modeling an echo path impulse response 60. By subtraction of the echo estimate 60 from the primary near-end signal 12a, the primary near-end signal 12a produced by the microphone 102 is modified as a function of the far-end signal 21 transmitted from the microphone 202 to the loudspeaker 101.

Apart from the filter unit 61 and the echo cancellation subtractor 63, the echo cancellation functions implemented in the telephone connection 8 further comprise a control unit 7 controlling the echo cancellation.

The filter unit 61 continuously samples the far-end signal 21 and divides the echo path estimated filter 60 (of length L), generated on basis of the sampled far-end signal 21, in N sub-windows 611, 612, ..., 61 N (N being a positive integer). Also, an analyzer 71 samples the far-end signal 21 and divides the past L frames of the far-end signal 21 into N sub-windows 711, 712, ..., 71 N. Note that the sub-windows 711, 712, ..., 71 N of the far-end signal 21 have preferably the same size as the N equidistant filter sub-windows 611, 612, ..., 61 N. The N sub-windows 711, 712, ..., 71 N of the far-end signal 21 are modified by means of the N corresponding sub-windows 611, 612, ..., 61 N of the echo path estimated filter 60, resulting in filtered signals. The modified far-end signal sub-windows are recomposed in the summing unit 62 and sent as a filter signal to the subtractor 63. In the subtractor 63, the filter signal is subtracted from the original near-end signal 12a, resulting in a residual near-end signal 12b. The residual near-end signal 12b, again, is input as a feedback signal 126 to the filter 61 where the feedback signal 126 is utilized for the adaptation of the echo estimate. Therefore, the filter unit 61 represents a self-adapting system.

Apart from the linear echo cancellation based on the echo path estimated filter 60, a non-linear echo cancellation is applied, too. To this end, a time-domain multi windowing approach is applied to compute the energy of the far-end signal 21 in the past L frames. N values of energy are computed for the far-end signal 21, corresponding to the energy in each of the N sub-windows 711, 712, ..., 71 N. The energy levels, PTx1, PTx2, ..., PTxN, in each of the N sub-windows 711, 712, ..., 71 N of the far-end signal 21 are determined and sent as input to the control unit 7, where they are used to define thresholds and make decisions. EnergTx corresponds to the energy in that sub-window associated with the main echo.

The echo cancellation functions of the telephone connection 8 further comprise a DTD unit 5. The DTD unit 5 samples both the far-end signal 21 and the primary near-end signal 12a to detect double-talk. The DTD unit 5 provides DTD signals to the control unit 7.

The energy value of the primary near-end signal 12a, EnergRx, in the current sample is determined in an energy analyzer 72 and sent to the control unit 7 where EnergRx is used to define thresholds and make decisions in the control unit 7. Also, the energy value of the residual near-end signal 12b, EnergResid, in the current frame is determined in another energy analyzer 43 and sent to the NLP 4 where EnergResid is used to define thresholds and make decisions in the NLP 4.

A noise analyzer 41 analyzes the noise in the primary near-end signal 12a and provides input to a comfort noise generator 42 which generates a comfort noise matching the background noise characteristics, to be used in the NLP 4. Both the noise analyzer 41 and the comfort noise generator 42 are controlled by the control unit 7, just as the NLP 4 is controlled by the control unit 7.

Preferably, the aforementioned functions associated with the echo cancellation of the telephone connection 8 are implemented into an echo canceller 81, preferably constituted by one or more echo cancellation servers within the telecommunication network 82. The echo cancellation functions, in particular the NLP 4 and the linear processing unit associated with the echo cancellation, may be composed of one or several interlinked computers, i.e., a hardware platform, a software platform basing on the hardware platform and several application programs executed by the system platform formed by the software and hardware platform. The functionalities of the echo canceller 81 are provided by the execution of these application programs. The application programs or a selected part of these application programs constitute a computer software product providing a residual echo modification function as described in the following, when executed on the system platform. Further, such computer software product is constituted by a storage medium storing these application programs or said selected part of application programs.

From a functional point of view, the echo cancellation functionalities provided by the echo canceller 81 comprise filter means 61 with adaptive filter coefficients 60 to provide the residual NES 12b on the basis of the FES 21 and the primary NES 12a, processing means to process the residual NES 12b as to deliver a final NES 12c with a reduced residual echo signal equal or lower than a chosen threshold, and control means 7 electrically connected to said filter means 61 and said processing means to control the functions of said filter means 61 and said processing means.

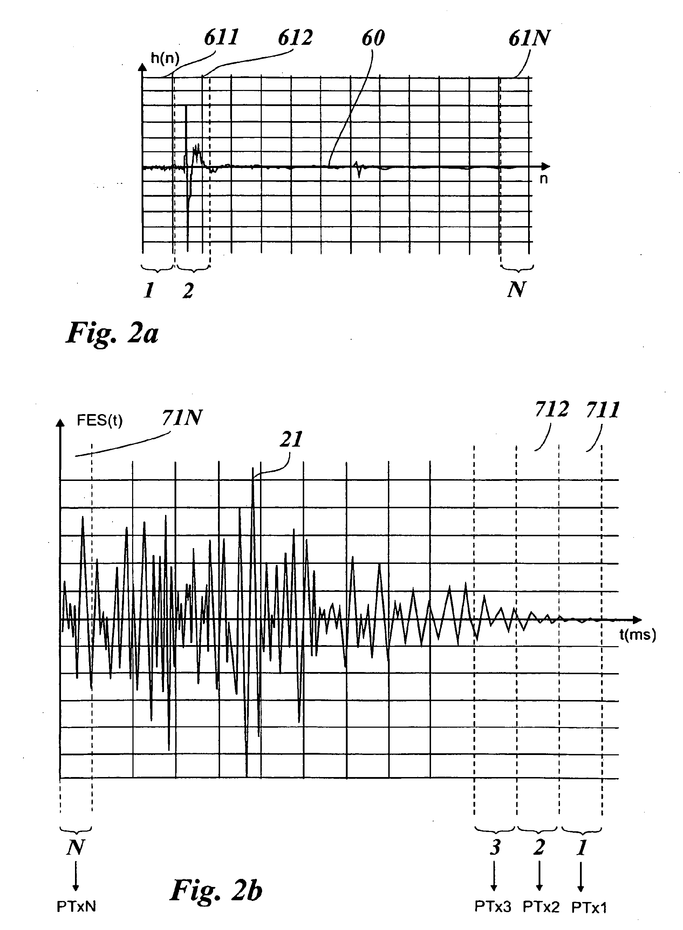

Fig. 2a shows an echo path estimate FIR h(n) 60 as a function of a sub-window number n, where n = 1, ..., N. The echo path estimate FIR h(n) 60 is divided into N subwindows 1 ... N and sub-filters 1 ... N, respectively, each sub-window 6111, 612, ..., 61 N with equal size.

Fig. 2b shows past L frames of the far-end signal (FES) 21 as a function of time t in the unit milliseconds (ms). The FES is divided into N sub-windows 1 to N with equal window size, corresponding to the N sub-filters shown in Fig. 2a.

Note that the 1 st FES sub-window 711 corresponds to the current FES signal. From each of the N sub-windows 711, 712, ..., 71 N of the FES, the energy level PTx1, PTx2, PTx3, ..., PTxN is determined.

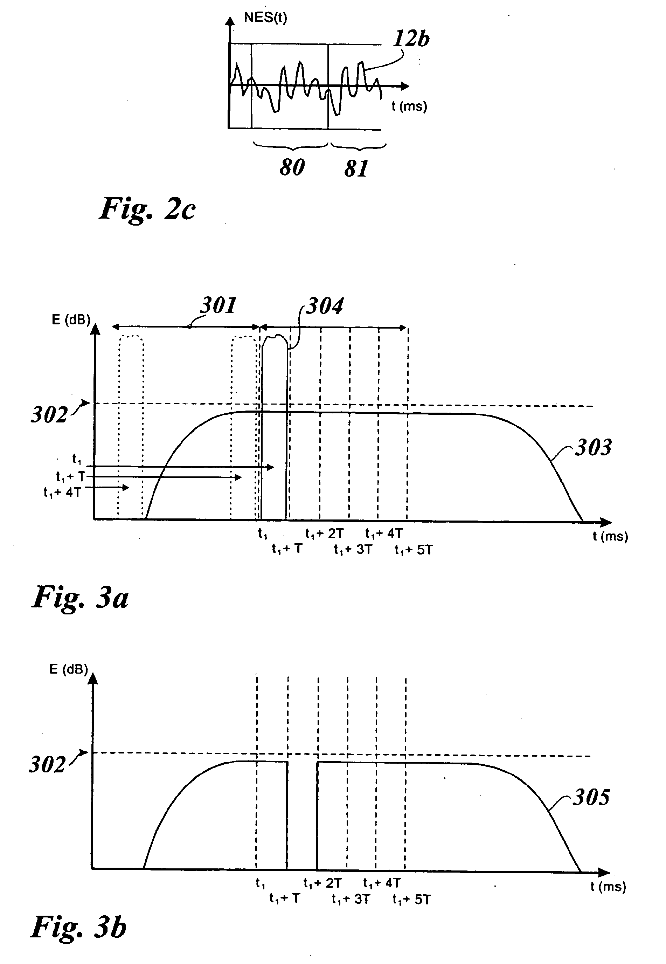

Fig. 2c shows a current sample of the residual near-end signal (NES) 12b as a function of time t in the unit milliseconds (ms). The residual NES 12b will be sampled in subsequent frames 80, 81 whereby the frame 81 is the current frame of the just-arriving residual near-end signal 12b. From the frames 80, 81, the current energy level EnergResid of the residual NES 12b is determined by the energy analyzer 43.

Fig. 2a shows that the echo path estimate FIR h(n) 60 is highest in the 2nd window. Thus, the main echo present in the primary near-end signal 12a originates in the 2nd sub-window of the far-end signal 21. According to the present invention, that far-end signal sub-window is selected which corresponds to the main portion of the echo present in the primary near-end signal, in accordance with the filter sub-window associated with the main portion of the echo. As the filter sub-window associated with the main portion of the echo is the 2nd sub-window 612 of the echo path estimate filter 60, the 2nd far-end signal sub-window 712 is selected. Thus, EnergTx = PTx2, where PTx2 is the far-end signal energy in the 2nd sub-window 712. All subsequent comparisons between far-end signals and near-end or echo-cancelled signals will be based on this selected EnergTx.

To understand the operation of the NLP 4 according to the current invention, it is helpful to recapitulate the operation of state-of-the-art NLPs. State-of-the-art non-linear processors based on energy comparison methods compare the energy of the echo-cancelled residual signal (referred to as EnergResid in the following) with the energy of the far-end signal in the past L frames (referred to as EnergTx_priorart in the following), where L corresponds to the tail capacity of the echo canceller83. As long as the difference between these two energie values is above a predefined threshold, the NLP is kept in blocking mode, i.e., the residual echo-cancelled signal is highly attenuated, or removed and replaced by comfort noise matching the background noise present at the near-end side.

However, this method has an important drawback when near-end speech at a nearly constant level is shortly interrupted (e.g., for 10 ms) by a high level fair-end signal, causing the difference (EnergTx_priorart - EnergResid) to be greater than the NLP threshold. Then, due to the mode of computation of EnergTx_priorart, the residual signal will be clipped not only for the required 10 ms but for the whole length of the echo tail capacity.

Regarding these state-of-the-art NLPs, reference is made to aforementioned the publications.

On the contrary, in the proposed new method, the selected far-end energy EnergTx for comparisons is the energy of the frame associated with the main echo. In the present example, this means EnergTx = PTx2, as aforementioned. According to the invention, the difference (EnergTx - EnergResid) is calculated. If the difference is greater than a predefined threshold, the NLP 4 assumes that the FES speaker speaks and the NES speaker listens. Therefore, the NLP 4 must clip the NES. On the other hand, if the difference is below the threshold, the NLP 4 assumes that there is double talk. Therefore, there is no need for the NLP 4 to clip the residual NES 12b. The NLP 4 lets the residual NES 12b pass unmodified.

Preferably, the size of the FES sub-windows 711, 712, ..., 71 N is equal to the size of the filter sub-windows 611, 612, ..., 61 N. However, the size of the NES sample 12b, i.e., the size of the frames 80, 81 may be different. If the size of the residual NES frames 80, 81 is different from the size of the FES sub-windows 711, 712, ..., 71 N, the comparison has to be done between the NES energy level EnergResid and a sum of weighted FES sub-window energies, i.e., a comparison between energies of samples analytically scaled/normalized to the same size.

Fig. 3a is diagram showing signal energy, in the unit of decibel (dB), as a function of time t, in the unit of milliseconds (ms). The diagram indicates, on the time axis, a tail capacity 301 of the NLP 4 and, on the energy axis, a NLP threshold energy 302. The diagram shows the course of a signal 303 which represents the energy of the residual near-end signal 12b. The signal 303 increases, then stays at a level slightly below the NLP threshold energy 302, and then again decreases. The diagram also shows the course of a signal 304 which represents the energy of the far-end signal 21. The signal 304 sharply increases at time t1, then stays at a level well above the NLP threshold energy 302, and then again decreases at time t1+T.

Therefore, Fig. 3a represents the aforementioned case where a near-end speech 303 at a nearly constant level is shortly interrupted (e.g., for 10 ms) by a high-energetic far-end signal 304, causing the difference ( EnergTx - EnergResid ) to be greater than the NLP threshold 302.

In the example of Figs. 3a to 3c, T is the duration of a sub-window, and the main echo is located in the 2nd sub-window, between T and 2 T (see Fig. 2a). If a highly energetic FES signal 304 occurs only between time t1 and t1+T, the echo of this signal will occur only between time t1+T and t1+2T of the NES signal 303.

Fig. 3b describes the impact of the proposed method on the NLP output signal, i.e., the final near-end signal 12c. Note that the main echo delay d is T < d < 2T. The diagram of Fig. 3b gives energy and time on the same scale and in the same units as the diagram of Fig. 3a. The diagram shows the course of a signal 305 representing the energy of the final near-end signal 12c. The signal increases as the signal 303 in Fig. 3a, then abruptly falls to zero at time t1+T (caused by the clipping of the NLP 4), stays at zero until time t1+2T (continued clipping) and abruptly increases again at time t1+2T (end of clipping) to the previous level, and then again decreases, just like the signal 303 in Fig. 3a. This means that the clipping caused by the NLP 4 according to the present invention lasts for a time period T, given in this example in ms.

The high FES level 304 which triggers the blocking mode of the NLP 4 is present in the time frame between t1 and t1+T on the time axis t (ms). As the NLP 4 "knows" from the echo path estimate filter that the delay d of the main echo is T < d < 2T, the NLP 4 blocks the NES signal 303 in the time frame between t1+T and t1+2T. If the delay d were, e.g., 3T < d < 5T, the NLP 4 would block the NES signal in the time frame between t1+3T and t1+5T. The NLP 4 according to the invention removes only the residual echo and only the altered portion of NES signal 303 for the time period when the echo of the FES signal occurs between time t1+T and t1+2T of the NES signal 303.

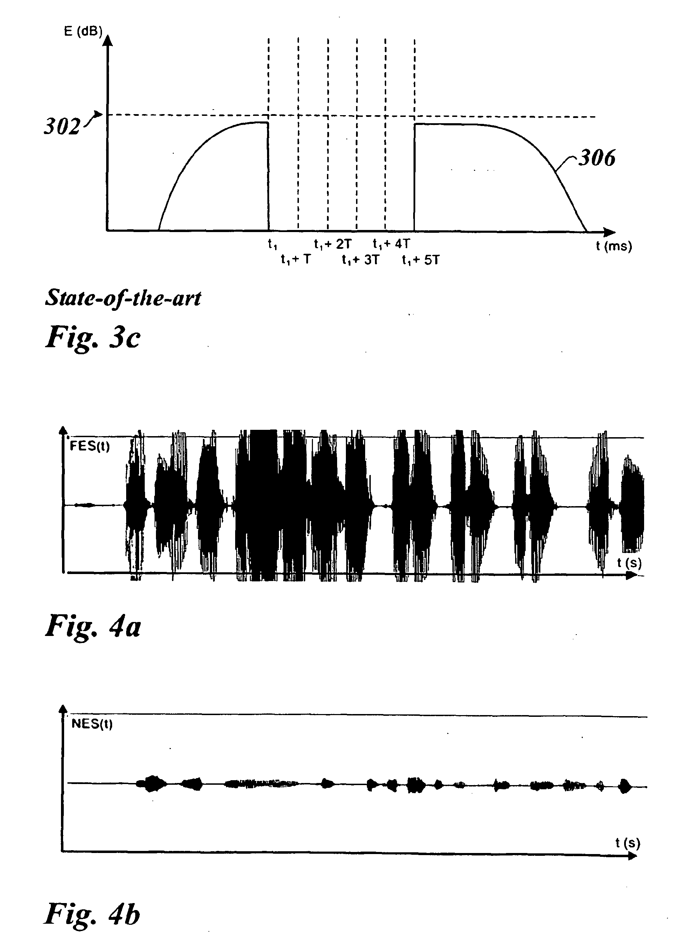

For a full understanding of the advantage the present invention it is helpful to contrast the present invention with the prior art. Fig. 3c describes, starting again from the situation described with regard to Fig. 3a, the impact of the aforementioned prior art method on the NLP output signal, i.e., on the final near-end signal 12c. The diagram of Fig. 3c gives energy and time on the same scale and in the same units as the diagrams of Fig. 3a and Fig. 3b. The diagram shows the course of a signal 306 representing the energy of the final near-end signal 12c. The signal increases like the signal 303 in Fig. 3a, then abruptly falls to zero at time t1 (clipping of prior-art NLP), stays at zero until time t1+5T (continued clipping) and abruptly increases again at time t1+5T (end of the clipping of prior-art NLP) to the previous level, and then again decreases, just like the signal 303 in Fig. 3a. This means that the clipping caused by a prior-art NLP lasts 5T ms, i.e., over the full length of the echo tail capacity.

A state-of-the-art NLP computes EnergTx by determining the maximum value of the energy levels of the past frames which lie within the tail capacity of the echo canceller. If the tail capacity of the echo canceller is, e.g., 5 T, EnergTx is the maximum energy level in this past time frame of length 5 T, determined by a sliding window. The blocking of the residual NES signal caused by the NLP 4 lasts a time frame of length 5 T, i.e., equal to the size of the echo canceller tail capacity.

The state-of-the-art NLP makes a comparison between the current NES frame energy and the maximum energy of the past L samples of the FES signal in order to be ensure that all residual echo is removed. So the state-of-the-art NLP removes undesired the residual echo and the non altered NES signal over a time period of 5 T, although the duration of this residual is only 1 T in the example.

The comparison of Figs. 3b and 3c shows that in the case of a highly energetic far-end signal situation as shown in Fig. 3a, the NLP output signal generated on the basis of the method according to the present invention is clipped only for the duration of the interrupting far-end signal, whereas the NLP output signal according to the state-of-the-art method is clipped for a time period corresponding to the tail capacity of the echo canceller.

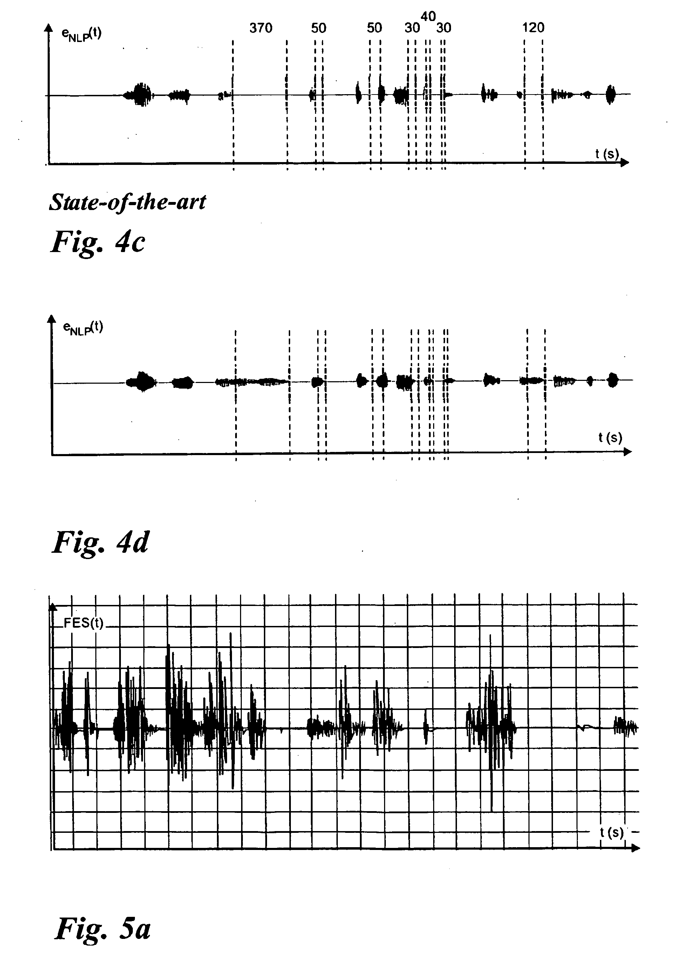

Thus, the invented method has profound consequences for the quality of telephone communication. Figs. 4a to 4d illustrate the advantageous effects provided by the proposed enhanced NLP in a double-talk situation. Fig. 4a shows a far-end signal FES (t) over time t (s) in the unit of seconds. Fig. 4b shows a primary near-end signal NES (t) over time t (s) in the unit of seconds. The primary near-end signal NES (t) comprises unwanted echo signals originating from the far-end signal FES (t) of Fig. 4a. Fig. 4c shows, as a function of time t (s) in the unit of seconds, an output signal e_NLP (t) of a state-of-the-art NLP when processed by an echo canceller with a tail capacity of 64 ms. The signal e_NLP (t) is derived from NES (t) according to the prior-art computation rules. There is no audible echo in the signal e_NLP (t) of Fig. 4c but significant clippings of near-end voice which disturb the communication. The numbers given in the diagram near the signal in Fig. 4c represent the length of the clippings observed with the state-of-the-art NLP, expressed in milliseconds.

Fig. 4d shows, as a function of time t (s) in the unit of seconds, a corresponding enhanced ("e") output signal e_eNLP (t) of a NLP according to the present invention, when processed by a 64 ms tail capacity echo canceller. There is no audible echo in the signal e_eNLP (t) of Fig. 4d and no clippings of near-end voice. Thus, the communication becomes better comprehensible. It can be observed that on approximately 4000 ms NES signal length, the NLP according to the present invention is able to avoid 865 ms of unwanted clippings.

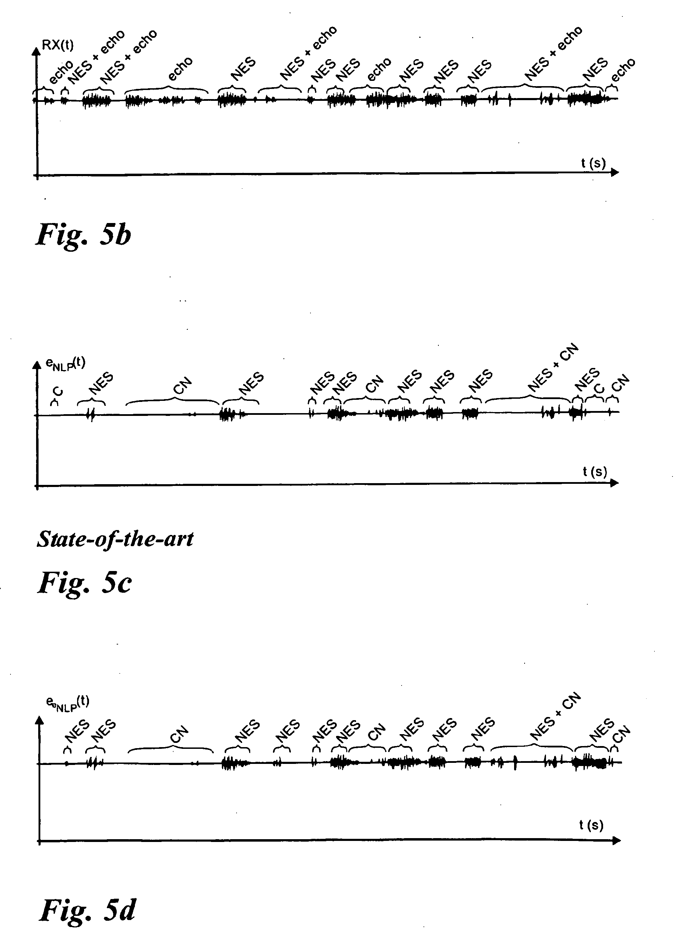

Figs. 5a to 5d give another illustration of the advantageous effects provided by the proposed enhanced NLP in a communication with echo, i.e., a double-talk situation. Fig. 5a shows a far-end signal FES (t) over time t (s) in the unit of seconds. Fig. 5b shows, on the same time scale as in Fig. 5a, a near-end signal Rx (t) before echo cancellation. The components of the Rx (t), i.e., near-end speech (= NES) and echo of the near-end signal Rx, are indicated above and below, respectively, of the signals 502. Fig. 5c shows the near-end signal e_NLP (t) as a function of time t (s) (time unit is seconds) after echo cancellation with a state-of-the-art NLP. The signal is echo-free but major clippings can be observed. The residual components of the near-end signal Rx are indicated above and below, respectively, of the signals. C means clipping, NES means near-end speech, and CN means comfort noise. That means that some NES signal sections have been removed ("clipped"), and some have been substituted by comfort noise.

Fig. 5d shows, as a function of time, a corresponding output signal e_eNLP (t) of a NLP according to the present invention, as a function of time t (s) in the unit of seconds. The signal e_eNLP (t) is echo-free and there are no unwanted clippings of the near-end signal, i.e., the component C (= clipping) which was present in the prior-art NLP output signal is missing in the enhanced NLP output signal shown in Fig. 5d. Moreover, the NES sections are more numerous and unseparated than in the prior-art case shown in Fig. 5c. Therefore, the NES signals are less chopped and the communication becomes easier to comprehend.

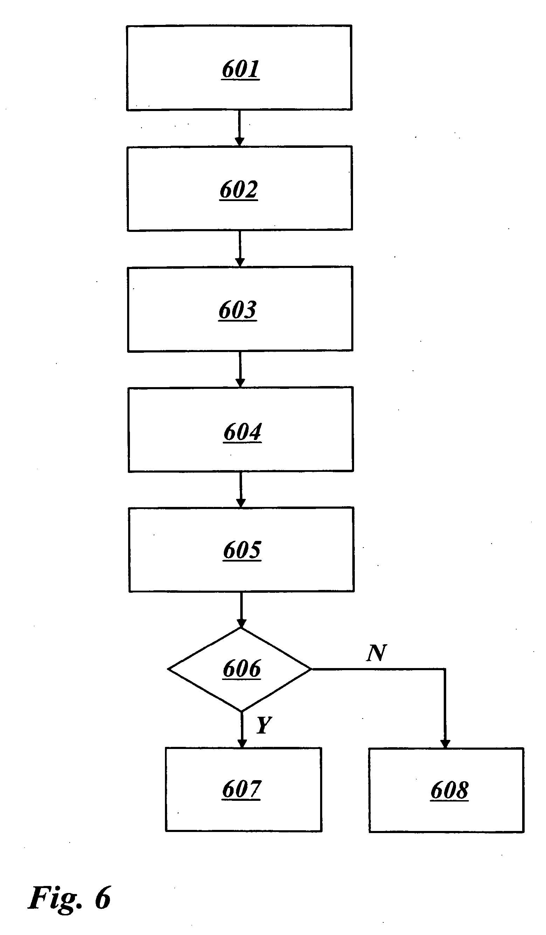

Fig. 6 shows a process flow diagram according to the present invention. The steps of the process flow diagram may be controlled and processed, respectively, by a processing unit of the echo cancellation server 81 of Fig. 1, e.g., according to a preferable embodiment, by the control unit 7. Preferably, the processing unit comprises a storage unit for storage of the aforementioned computer program product and a processor for execution of said computer program product. The execution of said computer program product triggers and controls, respectively, the execution of the steps of the process flow diagram.

In a first step 601, the past L frames (= packets) of the echo path estimated filter generated on the basis of the FES 21 are divided in N sub-windows. In step 602, the sub-window of the echo path estimated filter where the main echo is located is determined. Let us assume that it is the i-th sub-window. In step 603, the past L frames (= packets) of the FES 21 are divided in N sub-windows, of equal size as the filter sub-windows. In step 604, the energy level in the i-th sub-window of the FES is determined and named EnergTx. In step 605, the current NES frame is filtered, preferably using an adaptive FIR filter, the energy level of the current filtered NES frame is determined and named EnergResid.

In step 606, the difference: EnergTx - EnergResid is computed. If the difference is greater than a predefined threshold (leg Y), the NLP assumes that the FES speaker speaks and the NES speaker listens. Therefore, the NLP must modify the NES because it contains unwanted echo of the FES (step 607). The length of the modification is equal to the length of the sub-window.

If the difference is equal or below the threshold (leg N), the NLP assumes that there is double talk. Then, the main echo of FES has already been removed from the NES by the linear echo canceller. The residual echo is not perceivable by the FES speaker since it is covered by the high voice signal of the NES speaker. Therefore, there is no need for the NLP for modification. The NLP lets the residual NES signal pass (step 608).

Apart from the aforementioned order of steps 601 - 602 - 603, it is also possible that the execution of the steps of the process flow diagram is according to the following order: 601 - 603 - 602.

## Claims

1. A method of modifying a residual echo present in a residual near-end signal (12b) of a telecommunications connection (8) between a first terminal (1) providing a primary near-end signal (12a) at a first end of the telecommunications connection (8) and a second terminal (2) providing a far-end signal (21) at another end of the telecommunications connection (8), wherein said residual near-end signal (12b) is created from the primary near-end signal (12a) by a linear processing unit for echo cancellation,
**characterized in**
**that** the method comprises the steps of:
determining, in a multi-windowing scheme in the time domain, a plurality of sub-windows (711, 712, ..., 71 N) of the far-end signal (21);
selecting from said plurality of far-end signal sub-windows (711, 712, ..., 71 N) a sub-window (712) corresponding to a main portion of an echo present in the primary near-end signal (12a) according to an echo path estimate filter (60);
comparing an energy level (304) associated with said selected sub-window (712) of the far-end signal (21) with an energy level (303) associated with a sample (80, 81) of the residual near-end signal (12b); and
dependent on the comparison result, modifying said residual echo for a time period (T) which is equal to a length of said selected far-end signal sub-window (712).

2. The method of claim 1,
**characterized in**
**that** the method comprises the further steps of:
calculating a difference between the energy level (304) associated with said selected sub-window (712) of the far-end signal (21) and the energy level (303) associated with the sample of the residual near-end signal (12b);
comparing said difference with a threshold value (302); and
modifying the residual echo if said difference is greater than the threshold value (302).

3. The method of claim 1,
**characterized in**
**that** the method comprises the further steps of:
determining, in a multi-windowing scheme in the time domain, a plurality of sub-windows (611, 612, ..., 61 N) of the echo path estimate filter (60) and selecting a filter sub-window (612) associated with the main portion of the echo present in the primary near-end signal (12a), whereby said echo path estimated filter (60) is provided by the linear processing unit for echo cancellation; and
selecting said far-end signal sub-window (712) corresponding to the main portion of the echo present in the primary near-end signal (12a) in accordance with said selected filter sub-window (612) associated with the main portion of the echo.

4. The method of claim 1,
**characterized in**
**that** the method comprises the further steps of:
dividing the echo path estimated filter (60) having a length of L frames in N sub-windows (611, 612, ..., 61N), whereby N > 1; and
dividing the far-end signal (21) having a length of L frames in N sub-windows (711, 712, ..., 71 N), each of the N far-end signal sub-windows (711, 712, ..., 71 N) corresponding to one of the N filter sub-windows (611, 612, ..., 61 N).

5. The method of claim 1,
**characterized in**
**that** the method comprises the further steps of:
determining the energy level (303) of the residual near-end signal (12b) within a sub-window (80, 81) of the residual near-end signal (12b) corresponding to said selected sub-window (712) of the far-end signal (21); and
assigning the determined energy level as said energy level (303) associated with the sample of the residual near-end signal (12b).

6. The method of claim 1,
**characterized in**
**that** the method comprises the further step of:
choosing the size of the sub-windows (611, 612, ..., 61N) of the echo path estimated filter (60) and the size of the sub-windows (711, 712, ..., 71 N) of the far-end signal (21) equal to the size of the sample (80, 81) of the residual near-end signal (12b).

7. The method of claim 1,
**characterized in**
**that** the method comprises the further step of:
modifying the residual echo by highly attenuating the residual near-end signal (12b) or by muting the residual near-end signal (12b) and replacing it by comfort noise.

8. An echo canceller (83) with a linear processing unit for echo cancellation and a non-linear processing unit (4) for modifying a residual echo present in a residual near-end signal of a telecommunications connection (8) between a first terminal (1) providing a primary near-end signal (12a) at a first end of the telecommunications connection (8) and a second terminal (2) providing a far-end signal (21) at another end of the telecommunications connection (8), wherein said residual near-end signal (12b) is created from the primary near-end signal (12a) by the linear processing unit of the echo canceller (83),
**characterized in**
**that** the non-linear processing unit (4) is adapted to execute the following steps:
selecting from a plurality of sub-windows (711, 712, ..., 71 N) of the far-end signal (21) a sub-window (712) corresponding to a main portion of an echo present in the primary near-end signal (12a) according to an echo path estimate filter (60), wherein said said plurality of far-end signal sub-windows (711, 712, ..., 71 N) is determined in a multi-windowing scheme in the time domain;
comparing an energy level (304) associated with said selected sub-window (712) of the far-end signal (21) with an energy level (303) associated with a sample (80, 81) of the residual near-end signal (12b); and
dependent on the comparison result, modifying the residual echo for a time period (T) which is equal to a length of said selected far-end signal sub-window (712).

9. The non-linear processing unit (4) of claim 8,
**characterized in**
**that** the non-linear processing unit (4) is adapted to execute the further step of:
receiving an indication for the selection of said far-end signal sub-window (712) from a control unit (7) adapted to analyze said echo path estimate filter (60) to locate the main echo present in the primary near-end signal (12a).

10. A computer program product for modifying a residual echo present in a residual near-end signal (12b) of a telecommunications connection (8) between a first terminal (1) providing a primary near-end signal (12a) at a first end of the telecommunications connection (8) and a second terminal (2) providing a far-end signal (21) at another end of the telecommunications connection (8), wherein said residual near-end signal (12b) is created from the primary near-end signal (12a) by a linear processing unit for echo cancellation,
**characterized in**
**that** the computer program product, when executed by a processing unit (7), performs the steps of:
selecting from a plurality of sub-windows (711, 712, ..., 71 N) of the far-end signal (21) a sub-window (712) corresponding to a main portion of an echo present in the primary near-end signal (12a) according to an echo path estimate filter (60), whereby said plurality of far-end signal sub-windows (711, 712, ..., 71N) are determined in a multi-windowing scheme in the time domain;
comparing an energy level (304) associated with said selected sub-window (712) of the far-end signal (21) with an energy level (303) associated with a sample (80, 81) of the residual near-end signal (12b); and
dependent on the comparison result, modifying the residual echo for a time period (T) which is equal to a length of said selected far-end signal sub-window (712).

## Patentansprüche

1. Verfahren zur Änderung ines Restechos in einem senderseitigen Restsignal (12b) einer Telekommunikationsverbindung (8) zwischen einem ersten Endgerät (1), welches ein primäres senderseitiges Signal (12a) an einem ersten Ende der Telekommunikationsverbindung (8) bereitstellt, und einem zweiten Endgerät (2), welches ein empfängerseitiges Signal (21) an einem anderen Ende der Telekommunikationsverbindung (8) bereitstellt, wobei das besagte senderseitige Restsignal (12b) von einer linearen Verarbeitungseinheit für Echokompensation aus dem primären senderseitigen Signal (12a) erzeugt wird,
**dadurch gekennzeichnet,**
**dass** das Verfahren die folgenden Schritte umfasst:
Bestimmen, in einem Mehrfenster-Schema im Zeitbereich, einer Mehrzahl von Teilfenstern (711, 712, ..., 71N) des empfängerseitigen Signals (21);
Auswählen, aus der besagten Mehrzahl von Teilfenstern (711, 712, ..., 71N) des empfängerseitigen Signals, eines Teilfensters (712), welches einem Hauptabschnitt eines Echos in dem primären senderseitigen Signal (12a) entspricht, gemäß einem chopfadschätzungsfilter (60);
Vergleichen eines mit dem besagten ausgewählten Teilfenster (712) des empfängerseitigen Signal (21) assoziierten Energieniveaus (304) mit einem Energieniveau (303), welches mit einem Abtastwert (80, 81) des senderseitigen Restsignals (12b) assoziiert ist; und
in Abhängigkeit von dem ergleichsergebnis, Ändern des besagten Restechos für eine Zeitspanne (T), weiche einer Länge des besagten ausgewählten Teilfensters (712) des empfängerseitigen Signals entspricht.

2. Das Verfahren nach Anspruch 1,
**dadurch gekennzeichnet,**
**dass** das Verfahren die folgenden weiteren Schritte umfasst:
Berechnen einer Differen zwischen dem Energieniveau (304), welches mit dem besagten ausgewählten Teilfenster (712) des empfängerseitigen Signals (21) assoziiert ist, und dem Energieniveau (303), welches mit dem Abtastwert des senderseitigen Restsignal (12b);
Vergleichen der besagten Differenz mit einem Grenzwert (302); und
Ändern des Restechos, wenn die besagte Differenz den Grenzwert (302) überschreitet.

3. Das Verfahren nach Anspruch 1,
**dadurch gekennzeichnet,**
**dass** das Verfahren die folgenden weiteren Schritte umfasst:
Bestimmen, in einem Mehrfenster-Schema in dem Zeitbereich, einer Mehrzahl von Teilfenstern (611, 612, ..., 61N) des Echopfadschätzungsfilters (60), und
Auswählen eines Filter-Teilfensters (612), welches mit dem Hauptabschnitt des Echos in dem primären senderseitigen Signal (12a), wobei der besagte Echopfadschätzungsfilter (60) von der linearen Verarbeitungseinheit für die Echokompensation bereitgestellt wird; und Auswählen des besagten empfängerseitigen Signal-Teilfensters (712), welches dem Hauptabschnitt des Echos in dem primären senderseitigen Signal (12a) entspricht, gemäß dem besagten mit dem Hauptabschnitt des Echos assoziierten Filter-Teilfenster (612).

4. Das Verfahren nach Anspruch 1,
**dadurch gekennzeichnet,**
**dass** das Verfahren die folgenden weiteren Schritte umfasst:
Aufgliedern des Echopfadschätzungsfilters (60) mit einer Länge von L Rahmen in N Teilfenster(611, 612, ..., 61N), wobei N > 1; und
Aufgliedern des empfängerseitigen Signals (21) mit einer Länge von L Rahmen in N Teilfenster (711, 712, ... 71 N), wobei ein jedes der N empfängerseitigen Signal-Teilfenster (711, 712, ..., 71N) einem der N Filter-Teilfenster (611, 612, ..., 61N) entspricht.

5. Das Verfahren nach Anspruch 1,
**dadurch gekennzeichnet,**
**dass** das Verfahren die folgenden weiteren Schritte umfasst:
Bestimmen des Energieniveaus (303) des senderseitigen Restsignals (12b) innerhalb eines Teilfensters (80, 81) des senderseitigen Restsignals (12b), welches dem ausgewählten Teilfenster (712) des empfängerseitigen Signals (21) entspricht; und
Festsetzen des bestimmten Energieniveaus als das besagte mit dem Abtastwert des senderseitigen Restsignals (12b) assoziierte Energieniveau (303).

6. Das Verfahren nach Anspruch 1,
**dadurch gekennzeichnet,**
**dass** das Verfahren die folgenden weiteren Schritte umfasst:
Wählen der Größe der Teilfenster (611, 612, ..., 61N) des Echopfadschätzungsfiltes (60) und der Größe der Teilfenster (711, 712, ..., 71 N) des empfängerseitigen Signals (21) gleichwertig mit der Größe des Abtastwertes (80, 81) des senderseitige Restsignals (12b).

7. Das Verfahren nach Anspruch 1,
**dadurch gekennzeichnet,**
**dass** das Verfahren die folgenden weiteren Schritte umfasst:
Ändern des Restechos durch starkes Dämpfen des senderseitigen Restsignals (12b) oder durch Stummschalten des senderseitigen Restsignals (12b) und dessen Ersetzen durch ein Hintergrundrauschen.

8. Echokompensator (83) mit einer linearen Verarbeitungseinheit für die Echokompensation, und einer nicht linearen Verarbeitungseinheit (4) für die Änderung eines Restsignals in einem senderseitigen Restsignal einer Telekommunikationsverbindung (8) zwischen einem ersten Endgerät (1), welches ein primäres senderseitiges Signal (12a) an einem ersten Ende der Telekommunikationsverbindung (8) bereitstellt, und einem zweiten Endgerät (2), welches ein empfängerseitiges Signal (21) an einem anderen Ende der Telekommunikationsverbindung (8) bereitstellt, wobei das besagte senderseitige Restsignal (12b) von der linearen Verarbeitungseinheit des Echokompensators (83) erzeugt wird,
**dadurch gekennzeichnet,**
**dass** die nicht lineare Verarbeitungseinheit (4) für das Ausführen der folgenden Schritte ausgelegt ist:
Auswählen, aus einer Mehrzahl von Teilfenstern (711, 712, .... 71N) des empfängerseitigen Signals, eines Teilfensters (712), welches einem Hauptabschnitt eines Echos in dem primären senderseitigen Signal (12a) entspricht, gemäß einem Echopfadschätzungsfilter (60), wobei die besagte Mehrzahl von empfängerseitigen Signal-Teilfenstern (711, 712, ..., 71N) in einem Mehrfenster-Schema in dem Zeitbereich bestimmt wird ;
Vergleichen eines mit dem besagten ausgewählten Teilfenster (712) des empfängerseitigen Signals (21) assoziierten Energieniveaus (304) mit einem Energieniveau (303), welches mit einem Abtastwert (80, 81) des senderseitigen Restsignals (12b) assoziiert ist;
und
in Abhängigkeit von dem Vergleichsergebnis, Ändern des besagten Restechos für eine Zeitspanne (T), welche einer Länge des besagten ausgewählten Teilfensters (712) des empfängerseitigen Signals entspricht.

9. Nicht lineare Verarbeitungseinheit (4) nach Anspruch 8,
**dadurch gekennzeichnet,**
**dass** die nicht lineare Verarbeitungseinheit (4) für das Ausführen der folgenden weiteren Schritte ausgelegt ist:
Empfangen einer Angabe für die Auswahl des besagten empfängerseitigen Signal-Teilfensters (712) von einer Steuereinheit (7), welche dazu ausgelegt ist, den besagten Echopfadschätz ngsfilter (60) zu analysieren, um das Hauptecho in dem primären senderseitigen Signal (12a) zu lokalisieren.

10. Computerprogramm-Prodkt zum Ändern eines Restechos in einem senderseitigen Restsignal (12b) einer Telekommunikationsverbindung (8) zwischen einem ersten Erdgerät (1), welches ein primäres senderseitiges Signal (12a) an einem ersten Ende der Telekommunikationsverbindung (8) bereitstellt, und einem zweiten Endgerät (2), welches ein empfängerseitiges Signal (21) an einem anderen Ende der Telekommunikationsverbindung (8) bereitstellt, wobei das besagte senderseitige Restsignal (12b) von einer linearen Verarbeitungseinheit für Echokompensation aus dem primären senderseitigen Signal (12a) erzeugt wird,,
**dadurch gekennzeichnet,**
**dass** das Computerprogramm-Produkt, wenn es von einer Verarbeitungseinheit (7) ausgeführt wird, die folgenden Schritte ausführt:
Auswählen, aus der besagten Mehrzahl von Teilfenstern (711, 712, ..., 71N) des empfängerseitigen Signals, eines Teilfensters (712), welches einem Hauptabschnitt eines Echos in dem primären senderseitigen Signal (12a) entspricht, gemäß eine Echopfadschätzungsfilter (60), wobei die besagte Mehrzahl von empfängerseitigen Signal-Teilfenstern (711, 712, ..., 71N) in einem Mehrfenster-Schema in de Zeitbereich bestimmt wird ;
Vergleichen eines mit dem besagten ausgewählten Teilfenster (712) des empfängerseitigen Signals (21) assoziierten Energieniveaus (304) mit einem Energieniveau (303), welches mit einem Abtastwert (80, 81) des senderseitigen Restsignals (12b) assoziiert ist; und
in Abhängigkeit von dem Vergleichsergebnis, Ändern des besagten Restechos für eine Zeitspanne (T), welche einer Länge des besagten ausgewählten Teilfensters (712) des empfängerseitigen Signals entspricht.

## Revendications

1. Procédé de modification d'un écho résiduel présent dans un signal résiduel local (12b) d'une connexion de télécommunications (8) entre un premier terminal (1) produisant un signal local primaire (12a) à une première extrémité de la connexion de télécommunications (8) et un second terminal (2) produisant un signal distant (21) à une autre extrémité de la connexion de télécommunications (8), dans lequel ledit signal résiduel local (12b) est créé à partir du signal local primaire (12a) par une unité de traitement linéaire pour l'annulation de l'écho,
**caractérisé**
**en ce que** le procédé comprend les étapes suivantes :
détermination, dans un schéma à fenêtres multiples dans le domaine temporel, d'une pluralité de sous-fenêtres (711, 712, ..., 71 N) du signal distant (21); sélection parmi ladite pluralité de sous-fenêtres de signal distant (711, 712, ..., 71N) d'une sous-fenêtre (712) correspondant à une partie principale d'un écho présent dans le signal local primaire (12a) en fonction d'un filtre d'estimation de chemin d'écho (60) ;
comparaison d'un niveau d'énergie (304) associé à ladite sous-fenêtre sélectionnée (712) du signal distant (21) avec un niveau d'énergie (303) associé à un échantillon (80, 81) du signal résiduel local (12b) ;
et
en fonction du résultat de la comparaison, modification dudit écho résiduel pendant une période (T) égale à une longueur de ladite sous-fenêtre de signal distant sélectionnée (712).

2. Procédé selon la revendication 1,
**caractérisé**
**en ce que** le procédé comprend les étapes supplémentaires suivantes :
calcul d'une différence entre le niveau d'énergie (304) associé à ladite sous-fenêtre sélectionnée (712) du signal distant (21) et le niveau d'énergie (303) associé à l'échantillon du signal résiduel local (12b) ;
comparaison de ladite différence avec une valeur de seuil (302) ; et
modification de l'écho résiduel si ladite différence est supérieure à la valeur de seuil (302).

3. Procédé selon la revendication 1,
**caractérisé**
**en ce que** le procédé comprend les étapes supplémentaires suivantes :
détermination, dans un schéma à fenêtres multiples dans le domaine temporel, d'une pluralité de sous-fenêtres (611, 612, ..., 61N) du filtre d'estimation de chemin d'écho (60) et sélection d'une sous-fenêtre de filtre (612) associée à la partie principale de l'écho présent dans le signal local primaire (12a), grâce à quoi ledit filtre d'estimation de chemin d'écho (60) est fourni par l'unité de traitement linéaire pour l'annulation de l'écho ; et
sélection de ladite sous-fenêtre de signal distant (712) correspondant à la partie principale de l'écho présent dans le signal local primaire (12a) conformément à ladite sous-fenêtre de filtre sélectionnée (612) associée à la partie principale de l'écho.

4. Procédé selon la revendication 1,
**caractérisé**
**en ce que** le procédé comprend les étapes supplémentaires suivantes :
division du filtre d'estimation de chemin d'écho (60) ayant une longueur de L trames en N sous-fenêtres (611, 612, ..., 61N), où N > 1 ; et
division du signal distant (21) ayant une longueur de L trames en N sous-fenêtres (711, 712, ..., 71N), chacune des N sous-fenêtres de signal distant (711, 712, ..., 71N) correspondant à l'une des sous-fenêtres de filtre (611, 612, ..., 61 N).

5. Procédé selon la revendication 1,
**caractérisé**
**en ce que** le procédé comprend les étapes supplémentaires suivantes :
détermination du niveau d'énergie (303) du signal résiduel local (12b) dans une sous-fenêtre (80, 81) du signal résiduel local (12b) correspondant à ladite sous-fenêtre sélectionnée (712) du signal distant (21) ; et
assignation du niveau d'énergie déterminé comme ledit niveau d'énergie (303) associé à l'échantillon du signal résiduel local (12b).

6. Procédé selon la revendication 1,
**caractérisé**
**en ce que** le procédé comprend l'étape supplémentaire suivante :
choix d'une taille des sous-fenêtres (611, 612, ..., 61N) du filtre d'estimation de chemin d'écho (60) et d'une taille des sous-fenêtres (711, 712, ..., 71N) du signal distant (21) égales à la taille de l'échantillon (80, 81) du signal résiduel local (12b).

7. Procédé selon la revendication 1,
**caractérisé**
**en ce que** le procédé comprend l'étape supplémentaire suivante :
modification de l'écho résiduel par forte atténuation du signal résiduel local (12b) ou par suppression du signal résiduel local (12b) et remplacement par un bruit de confort.

8. Annuleur d'écho (83) comprenant une unité de traitement linéaire pour l'annulation de l'écho et une unité de traitement non linéaire (4) pour modifier un écho résiduel présent dans un signal résiduel local d'une connexion de télécommunications (8) entre un premier terminal (1) produisant un signal local primaire (12a) sur une première extrémité de la connexion de télécommunications (8) et un second terminal (2) produisant un signal distant (21) sur une autre extrémité de la connexion de télécommunications (8), dans lequel ledit signal résiduel local (12b) est créé à partir du signal distant primaire (12a) par l'unité de traitement linéaire de l'annuleur d'écho (83),
**caractérisé**
**en ce que** l'unité de traitement non linéaire (4) est adaptée pour exécuter les étapes suivantes :
sélection parmi une pluralité de sous-fenêtres (711, 712, ..., 71N) du signal distant (21) d'une sous-fenêtre (712) correspondant à une partie principale d'un écho présent dans le signal local primaire (12a) en fonction d'un filtre d'estimation de chemin d'écho (60), dans lequel ladite pluralité de sous-fenêtres de signal distant (711, 712, ..., 71 N) sont déterminées dans un schéma à fenêtres multiples dans le domaine temporel ;
comparaison d'un niveau d'énergie (304) associé à ladite sous-fenêtre sélectionnée (712) du signal distant (21) avec un niveau d'énergie (303) associé à un échantillon (80, 81) du signal résiduel local (12b) ;
et
en fonction du résultat de a comparaison, modification de l'écho résiduel pendant une période (T) égale à une longueur de ladite sous-fenêtre de signal distant sélectionnée (712).

9. Unité de traitement non linéaire (4) selon la revendication 8,
**caractérisée**
**en ce que** l'unité de traitement non linéaire (4) est adaptée pour exécuter l'étape supplémentaire suivante :
réception d'une indication pour la sélection de ladite sous-fenêtre de signal distant (712) depuis une unité de commande (7) adaptée pour analyser ledit filtre d'estimation de chemin d'écho (60) pour localiser l'écho principal présent dans le signal local primaire (12a).

10. Produit de programme informatique pour modifier un écho résiduel présent dans un signal résiduel local (12b) d'une connexion de télécommunications (8) entre un premier terminal (1) produisant un signal local primaire (12a) à une première extrémité de la connexion de télécommunications (8) et un second terminal (2) produisant un signal distant (21) à une autre extrémité de la connexion de télécommunications (8), dans lequel ledit signal résiduel local (12b) est créé à partir du signal local primaire (12a) par une unité de traitement linéaire pour l'annulation de l'écho,
**caractérisé**
**en ce que** le produit de programme informatique, lorsqu'il est exécuté par une unité de traitement (7), effectue les étapes consistant à :
sélectionner parmi une pluralité de sous-fenêtres (711, 712, ..., 71N) du signal distant (21) une sous-fenêtre (712) correspondant à une partie principale d'un écho présent dans le signal local primaire (12a) en fonction d'un filtre d'estimation de chemin d'écho (60), grâce à quoi ladite pluralité de sous-fenêtres de signal distant (711, 712, ..., 71N) sont déterminées dans un schéma à fenêtres multiples dans le domaine temporel
comparer un niveau d'énergie (304) associé à ladite sous-fenêtre sélectionnée (712) du signal distant (21) avec un niveau d'énergie (303) associé à un échantillon (80, 81) du signal résiduel local (12b) ; et
en fonction du résultat de la comparaison, modifier l'écho résiduel pendant une période (T) égale à une longueur de ladite sous-fenêtre de signal distant sélectionnée (712).
